Europäisches Patentamt

(19) European Patent Office

Office européen des brevets

(11) Numéro de publication : **0 028 790**
**B1**

(12) FASCICULE DE BREVET EUROPÉEN

(45) Date de publication du fascicule du brevet :
15.08.84

(21) Numéro de dépôt : **80106749.7**

(22) Date de dépôt : **03.11.80**

(51) Int. Cl.³ : **G 02 B    7/26**

(54) Connecteur pour fibres optiques.

(30) Priorité : **08.11.79 FR 7927543**

(43) Date de publication de la demande :
**20.05.81 Bulletin 81/20**

(45) Mention de la délivrance du brevet :
**15.08.84 Bulletin 84/33**

(84) Etats contractants désignés :
**CH DE FR GB IT LI NL SE**

(56) Documents cités :
**FR-A- 2 406 210**

(73) Titulaire : **COMPAGNIE LYONNAISE DE TRANSMIS-
SIONS OPTIQUES Société anonyme dite:**
**170, Quai de Clichy**
**F-92111 Clichy (FR)**

(72) Inventeur : **Mignien, Georges**
**30, Rue Voltaire**
**F-69330 Meyzieu (FR)**

(74) Mandataire : **Weinmiller, Jürgen et al**
**Zeppelinstrasse 63**
**D-8000 München 80 (DE)**

## Description

La présente invention concerne un connecteur pour fibres optiques, comprenant deux groupes de trois tiges de maintien cylindriques de révolution et de même diamètre, et des moyens de guidage comprenant au moins trois coussinets maintenus coaxiaux, l'un au centre et les deux autres de chaque côté, et permettant de maintenir les trois tiges de chaque groupe côte à côte en contact mutuel, de façon à réserver un canal central, délimité par les surfaces latérales des tiges de chaque groupe, pour loger chaque fibre optique.

La demande de brevet français n° 2 406 210 au nom de THOMSON CSF décrit un connecteur dans lequel les deux groupes de trois tiges de maintien sont maintenus par trois bagues coaxiales, fendues, élastiques et mises bout à bout, formant ainsi un guidage sur toute la longueur des deux groupes de trois piges.

Ce connecteur n'assure pas un bon guidage des trois piges. En effet, la longueur des bagues est plus grande que leur diamètre et ceci entraîne une difficulté d'usinage et un défaut de parallélisme qui nuit au bon centrage des deux groupes de trois piges.

La présente invention a donc pour but de procurer un connecteur qui soit facile à fabriquer, de structure simple, qui assure un bon centrage des deux groupes de trois piges et qui permette un réglage facile de l'alignement des axes des fibres optiques, même sur chantier.

Le connecteur de l'invention est caractérisé en ce que le coussinet central enserre, avec un jeu compris entre 1 et 2 microns entre le diamètre du cercle exinscrit aux trois tiges cylindriques de chaque groupe et le diamètre intérieur de ce coussinet, les deux groupes de trois tiges de part et d'autre du plan de contact des extrémités des tiges, et en ce que les deux coussinets latéraux enserrent chacun un desdits deux groupes de trois tiges avec un jeu entre le diamètre du cercle exinscrit aux trois tiges cylindriques de chaque groupe et le diamètre intérieur de chaque coussinet latéral, égal ou légèrement supérieur au jeu du coussinet central enserrant les tiges.

Il répond en outre de préférence à au moins l'une des caractéristiques suivantes :

— Les coussinets sont en un matériau plus dur que celui des tiges de maintien et de résistance élevée à l'usure.

— Les coussinets sont ajustés dans des portées d'un manchon coaxial, le coussinet central étant dans le plan de symétrie du manchon, et les coussinets latéraux aux extrémités de celui-ci.

— Ledit manchon coaxial se compose de deux moitiés symétriques, enfoncées à force dans un manchon externe de serrage.

— Les coussinets sont au nombre de quatre, deux aux extrémités de chacune des moitiés du manchon coaxial et deux dans son milieu.

— Ledit manchon coaxial se compose de deux pièces latérales symétriques, chacune comportant à son extrémité externe la portée d'un coussinet, et d'une pièce intermédiaire d'alésage interne de diamètre supérieur à celui des alésages des pièces latérales, formant portée pour un ou deux coussinets centraux.

Il est décrit ci-après, à titre d'exemple et en référence aux figures du dessin annexé, trois connecteurs de fibres optiques selon l'invention.

La figure 1 représente schématiquement en perspective éclatée avec arrachement partiel du manchon un connecteur à quatre coussinets.

La figure 2A représente en coupe axiale un manchon comportant trois coussinets.

La figure 2B représente la partie centrale d'un manchon analogue à celui de la figure 2A, mais comportant deux coussinets adjacents au lieu d'un seul dans cette partie centrale.

La figure 3 représente en élévation et semi-coupe axiale un manchon en trois parties.

La figure 4 représente en élévation et coupe axiale l'ensemble d'un connecteur comportant un manchon analogue à celui de la figure 3.

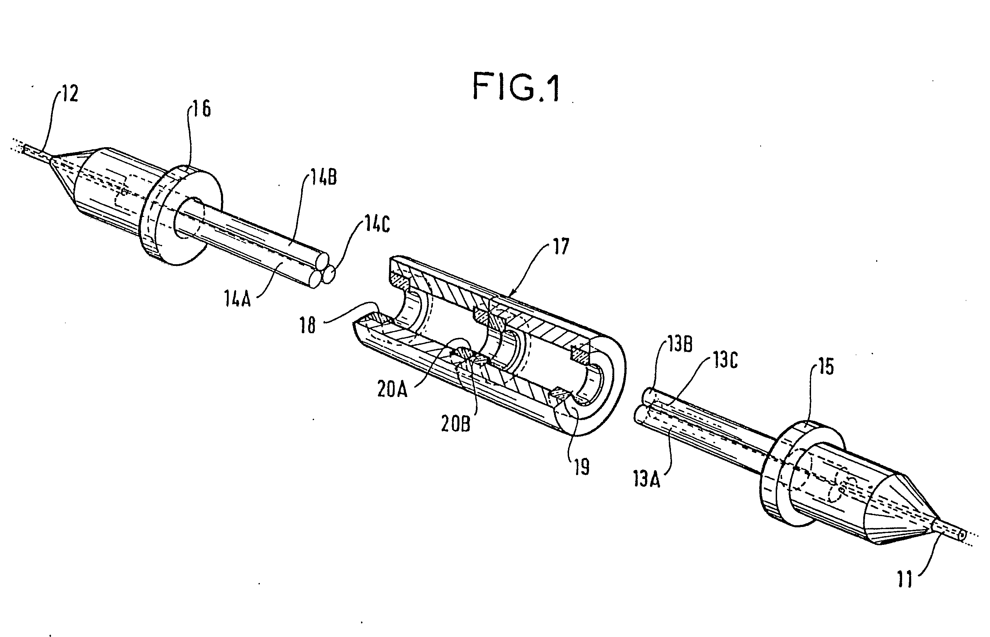

Dans la figure 1, les extrémités 11 et 12 de deux fibres à raccorder sont immobilisées chacune entre trois tiges cylindriques d'acier de même diamètre, 13A, 13B, 13C d'une part, 14A, 14B, 14C d'autre part. Ces tiges cylindriques sont elles-mêmes enfilées dans des anneaux de maintien 15, 16. Les fibres 11, 12 sont immobilisées à l'intérieur des tiges 13A, 13B, 13C et 14A, 14B, 14C, et ces dernières à l'intérieur des anneaux de maintien 15, 16, par surmoulage à l'aide d'une résine époxyde dans un moule approprié ; on forme ainsi deux demi-connecteurs identiques. Les faces terminales en regard de ces demi-connecteurs sont soigneusement dressées au ras de la face terminale de la fibre correspondante, de manière à limiter les pertes de lumière lors de l'assemblage des demi-connecteurs.

Cet assemblage est effectué en engageant les deux demi-connecteurs dans un manchon cylindrique de raccordement 17 qui comporte intérieurement quatre coussinets de guidage 18, 20A, 20B, 19 en rubis, rigoureusement identiques deux à deux, car percés simultanément par groupes de deux et finis par rodage, de manière que les deux coussinets centraux adjacents 20A et 20B présentent un même diamètre intérieur supérieur d'un ou deux microns seulement au diamètre du cercle exinscrit aux trois tiges cylindriques de chacun des demi-connecteurs, tandis que les coussinets d'extrémité 18 et 19 ont un diamètre de perçage supérieur de 6 microns environ à celui des coussinets centraux.

Par exemple, dans une forme particulière de réalisation, les coussinets centraux sont percés au diamètre de 1,772 mm, et les coussinets extrêmes au diamètre de 1,778 mm.

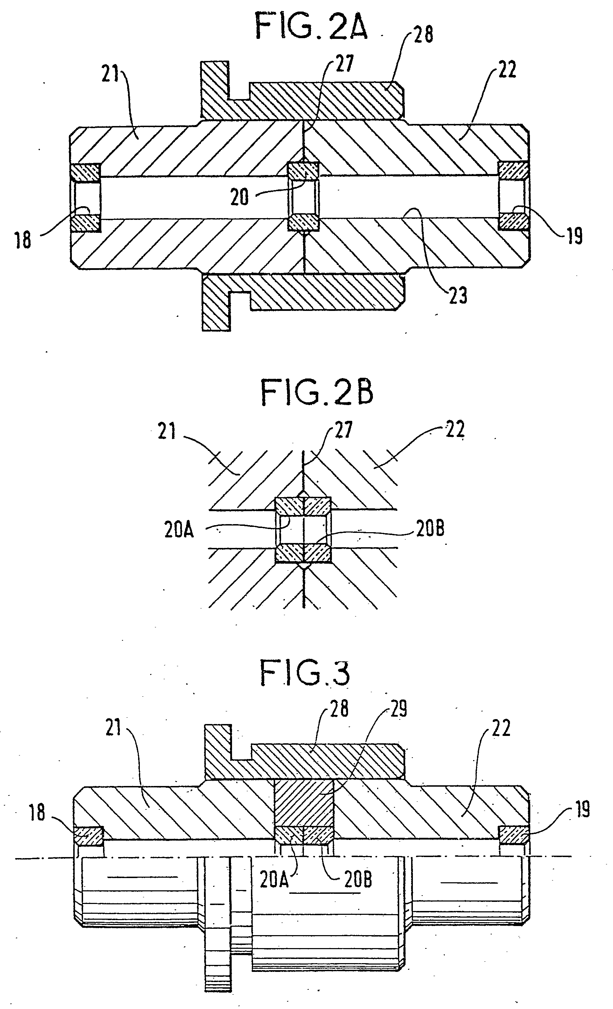

Il est également possible de remplacer les deux coussinets centraux accolés par un seul, mais il serait difficile de réaliser une portée de guidage suffisamment longue avec un seul coussinet. Il est préférable, pour des raisons évidentes de commodité d'usinage, de fabriquer un manchon en plusieurs parties. La figure 2A représente un manchon de ce genre. Celui-ci est formé de deux demi-manchons 21, 22 symétriques par rapport à leur plan médian de contact 27, qui comportent à leurs deux extrémités des logements de diamètre supérieur à leur diamètre commun d'alésage 23, dans lesquels les coussinets latéraux 18, 19 et le coussinet central 20 sont ajustés très serrés. Ces deux demi-manchons sont maintenus coaxiaux et appliqués l'un contre l'autre par un manchon externe 28 dans l'alésage duquel ils sont enfoncés à force.

Dans la variante dont la partie centrale est représentée en figure 2B, il existe deux coussinets centraux adjacents 20A, 20B à la place du coussinet unique 20 de la figure 2A.

Le coussinet en trois parties représenté en figure 3 comporte deux éléments latéraux 21 et 22 et une pièce intermédiaire 29. L'alésage interne de cette pièce, de diamètre supérieur à celui des éléments 21 et 22, sert de logement aux deux coussinets centraux 20A, 20B ; l'ensemble des trois pièces 21, 29, 22 est enfoncé à force dans l'alésage du manchon externe 28.

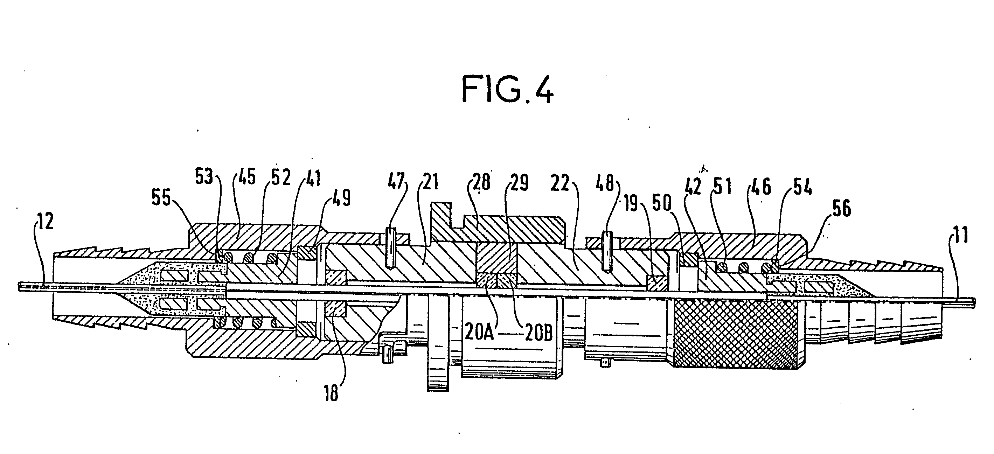

La figure 4 représente l'ensemble des éléments du connecteur montés et raccordés. Sur cette figure 41 et 42 représentent les embouts surmoulés autour des fibres 11, 12 et de leurs tiges de maintien. Le manchon interne de guidage comporte les trois parties, latérales 21 et 22, et centrale 29, enserrant les quatre coussinets coaxiaux 18, 20A, 20B et 19. Les trois parties du manchon de guidage sont enfoncées à force dans le manchon externe 28, de manière à constituer un tout indissociable. Deux capuchons 45 et 46 viennent se fixer de part et d'autres du manchon interne au moyen d'un système à baïonnette utilisant deux ergots de retenue 47 et 48 enfoncés dans le corps du manchon et deux ressorts 51 et 52. Ces capuchons maintiennent les extrémités des embouts 41 et 42 en appui l'un contre l'autre par l'intermédiaire de deux segments circulaires 49 et 50. Deux rondelles en matière plastique à faible coefficient de frottement (par exemple en polytétrafluoréthylène) 53 et 54, insérées entre les extrémités des ressorts 51, 52 et les épaulements internes 55, 56 des capuchons, permettent à ceux-ci de tourner par rapport aux embouts et assurent ainsi le découplage angulaire des embouts par rapport aux manchons nécessaire à un positionnement correct et aisé.

Bien que les formes de réalisation des connecteurs qui viennent d'être décrites en référence aux figures paraissent préférables, on comprendra que diverses modifications peuvent leur être apportées sans sortir du cadre de l'invention, certains de leurs organes pouvant être remplacés par d'autres qui joueraient un rôle technique analogue. On peut en particulier remplacer l'encliquetage à baïonnette des manchons par une fixation par frettage et écrou, ou par bagues fendues, ou par tout autre dispositif équivalent.

Le matériau des coussinets peut être un matériau dur et résistant à l'usure autre que le rubis.

L'invention s'applique en particulier aux lignes de transmission d'informations à fibres optiques.

## Revendications

1. Connecteur pour aligner deux fibres optiques, comprenant deux groupes de trois tiges de maintien (13A, 13B, 13C, 14A, 14B, 14C), cylindriques de révolution et de même diamètre, et des moyens de guidage desdits deux groupes de tiges destinés à être amenés face à face, lesdits moyens comprenant au moins trois coussinets (18, 19, 20) maintenus coaxiaux, l'un au centre et les deux autres de chaque côté, et permettant de maintenir les trois tiges de chaque groupe côte à côte en contact mutuel, de façon à réserver un canal central, délimité par les surfaces latérales des tiges de chaque groupe, pour loger chaque fibre optique, caractérisé en ce que le coussinet central (20) enserre, avec un jeu compris entre 1 et 2 microns entre le diamètre du cercle exinscrit aux trois tiges cylindriques de chaque groupe et le diamètre intérieur de ce coussinet, les deux groupes de trois tiges de part et d'autre du plan de contact des extrémités des tiges, et en ce que les deux coussinets latéraux (18, 19) enserrent chacun un desdits deux groupes de trois tiges avec un jeu entre le diamètre du cercle exinscrit aux trois tiges cylindriques de chaque groupe et le diamètre intérieur de chaque coussinet latéral, égal ou légèrement supérieur au jeu du coussinet central enserrant les tiges.

2. Connecteur selon la revendication 1, caractérisé en ce que les coussinets sont en un matériau plus dur que celui des tiges de maintien et de résistance élevée à l'usure.

3. Connecteur selon les revendications 1 ou 2, caractérisé en ce que les coussinets sont ajustés dans des portées d'un manchon coaxial (17), le coussinet central étant dans le plan de symétrie du manchon, et les coussinets latéraux aux extrémités de celui-ci.

4. Connecteur selon la revendication 3, caractérisé en ce que ledit manchon coaxial se compose de deux moitiés symétriques (21, 22, figure 2A), enfoncées à force dans un manchon externe de serrage (28).

5. Connecteur selon la revendication 4, caractérisé en ce que les coussinets sont au nombre de quatre, deux (18, 19) aux extrémités de chacune des moitiés du manchon coaxial et deux (20A, 20B) dans son milieu.

6. Connecteur selon la revendication 3, caractérisé en ce que ledit manchon coaxial se compose de deux pièces latérales symétriques (21, 22, figures 3, 4), chacune comportant à son extrémité externe la portée d'un coussinet, et d'une pièce intermédiaire (29) d'alésage interne de diamètre supérieur à celui des alésages des pièces latérales, formant portée pour un (20) ou deux (20A, 20B) coussinets centraux.

## Claims

1. A connector for aligning two optical fibres, comprising two groups of three cylindrical support rods (13A, 13B, 13C, 14A, 14B, 14C) of rotational symmetry and of identical diameters, and guide means of said two groups of rods conceived to be brought into a face to face disposition, said means comprising at least three bearing (18, 19, 20) which are held coaxially, one in the center and the other two on each side, and permitting to maintain the three rods of each group side by side in mutual contact, so as to provide a central channel, delimited by the lateral surfaces of the rods of each group, for housing each optical fibre, characterized in that the central bearing (20) surrounds, with a clearance included between 1 and 2 μm between the diameter of the tangential circle around the three cylindrical rods of each group and the inner diameter of this bearing, the two groups of three rods on either side of the contact plane of the ends of the rods, and in that the two lateral bearings (18, 19) each surround one of said two groups of three rods with a clearance between the diameter of the tangential circle around the three cylindrical rods of each group and the inner diameter of each lateral bearing, equal to or slightly larger than the clearance of the central bearing surrounding the rods.

2. A connector according to claim 1, characterized in that the bearings are made of a material which is harder than that of the support rods and which has a high wear-resistance.

3. A connector according to claims 1 or 2, characterized in that the bearings are adjusted in support areas of a coaxial sleeve (17), the central bearing being in the symmetry plane of the sleeve and the lateral bearings at its ends.

4. A connector according to claim 3, characterized in that said coaxial sleeve consists of two symmetrical half-sleeves (21, 22, fig. 2A) which are force fitted into an outer clamping sleeve (28).

5. A connector according to claim 4, characterized in that there are four bearings, two (18, 19) at the ends of each of the coaxial half-sleeves and two (20A, 20B) in its center.

6. A connector according to claim 3, characterized in that said coaxial sleeve consists of two lateral symmetrical pieces (21, 22, figures 3, 4), each one comprising at its outer end the support area of a bearing, and of an intermediate piece (29) with an inner bore of a diameter greater than that of the bores of the lateral pieces, forming a support area for one (20) or two (20A, 20B) central bearings.

## Ansprüche

1. Verbinder zur fluchtenden Ausrichtung zweier optischer Fasern, der zwei Gruppen von drei drehzylindrischen Haltestäben (13A, 13B, 13C, 14A, 14B, 14C) gleichen Durchmessers und Führungsmittel für diese beiden Gruppen von zueinander in stirnseitige Flucht zu bringenden Stäben aufweist, wobei diese Mittel mindestens drei Lagerwülste (18, 19, 20) aufweisen, die koaxial gehalten werden, und zwar der eine in der Mitte und die beiden anderen auf beiden Seiten, und die es ermöglichen, die drei Stäbe jeder Gruppe Seite an Seite und in gegenseitigem Kontakt zu halten, so daß ein zentraler Kanal ausgespart bleibt, der von den seitlichen Oberflächen der Stäbe jeder Gruppe begrenzt wird, um jede optische Faser aufzunehmen, dadurch gekennzeichnet, daß der zentrale Wulst (20) mit einem Spiel von zwischen 1 und 2 μm zwischen dem Durchmesser des Kreises, der von den drei zylindrischen Stäben jeder Gruppe umschrieben wird, und dem inneren Durchmesser dieses Wulstes die beiden Gruppen von drei Stäben auf beiden Seiten der Kontaktebene der Stäbe umfaßt, und daß die beiden Seitenwülste (18, 19) je eine der beiden Gruppen von drei Stäben mit einem Spiel zwischen dem Durchmesser des Kreises, der von den drei zylindrischen Stäben jeder Gruppe umschrieben wird, und dem inneren Durchmesser jedes Seitenwulstes, das gleich oder etwas größer als das Spiel des die Stäbe umgebenden zentralen Wulstes ist, die Stäbe umfassen.

2. Verbinder nach Anspruch 1, dadurch gekennzeichnet, daß die Lagerwülste aus einem Material sind, das härter ist als das der Haltestäbe und das eine große Abnutzungsfestigkeit aufweist.

3. Verbinder nach den Ansprüchen 1 oder 2, dadurch gekennzeichnet, daß die Lagerwülste in den Lagerflächen einer zylindrischen Buchse (17) eingepaßt sind, wobei der zentrale Wulst sich in der Symmetrieebene der Buchse befindet und die Seitenwülste an ihren Enden.

4. Verbinder nach Anspruch 3, dadurch gekennzeichnet, daß die koaxiale Buchse aus zwei symmetrischen Hälften besteht (21, 22, Fig. 2A), die mit Gewalt in eine äußere Preßbuchse (28) eingefügt sind.

5. Verbinder nach Anspruch 4, dadurch gekennzeichnet, daß vier Wülste vorgesehen sind, und zwar zwei (18, 19) an den Enden jeder der Hälften der koaxialen Buchse und zwei (20A, 20B) in ihrer Mitte.

6. Verbinder nach Anspruch 3, dadurch gekennzeichnet, daß die koaxiale Buchse aus zwei symmetrischen Seitenteilen (21, 22, Figuren 3, 4), von denen jedes an seinem äußeren Ende die Lagerfläche eines Wulstes aufweist, und einem Zwischenteil (29) besteht, dessen innere Bohrung einen größeren Durchmesser aufweist als die Bohrungen der Seitenflächen und welches eine Lagerfläche für einen (20) oder zwei (20A, 20B) zentrale Wülste bildet.

# FIG.1

0 028 790

# FIG.2A

# FIG.2B

# FIG.3

# FIG.4

0 028 790